# EUROPEAN PATENT SPECIFICATION

(11) **EP 3 522 731 B1**
(45) Date of publication and mention of the grant of the patent: **29.12.2021**
(21) Application number: 17859274.7
(22) Date of filing: 06.10.2017
(51) Int. Cl.: A23C 3/00, A23L 5/10, A23L 13/00, A23L 13/50, A23L 17/00, A23P 20/10, A23P 20/12

(54) **METHOD FOR COOKING A FOOD PRODUCT**
VERFAHREN ZUM GAREN EINES LEBENSMITTELPRODUKTS
PROCÉDÉ DE CUISSON D'UN PRODUIT ALIMENTAIRE

(30) Priority: 07.10.2016 US 201662405645 P; 04.01.2017 US 201715398385; 17.03.2017 US 201715462484
(43) Date of publication of application: 14.08.2019
(73) Proprietor: Sugar Creek Packing Co., Ohio, 43160 (US)
(72) Inventor: AUERNHEIMER, Mark, Richmond, VA 23220 (US); SHEPARD, Zachary, Cincinnati, OH 45223 (US); COWLES, Jeffrey, D., St. Simons Island, GA 31522 (US)
(74) Representative: Feder Walter Ebert
(86) International application number: PCT/US2017/055600
(87) International publication number: WO 2018/067972

(56) References cited:
- WO-A1-95/30344
- WO-A1-2015/038035
- US-A- 3 952 110
- US-A- 3 956 515
- US-A- 3 966 980
- US-A- 3 966 980
- US-A- 4 943 438
- US-A- 5 246 719
- US-A1- 2004 262 301
- US-A1- 2010 056 628
- US-A1- 2013 247 780
- US-A1- 2014 093 627
- US-B2- 8 216 510
- MARCELLE BIENVENU: 'The art and science of battering and frying: Cooking Creole' NOLA.COM 20 April 2015, XP055479854

## Description

### TECHNICAL FIELD

The present disclosure relates to methods for cooking a food product, and more particularly, to methods utilizing batter-coated food products cooked in-pouch before frying.

### BACKGROUND

Fried food products, such as fried animal protein, especially in the form of fried chicken pieces or fried fish pieces, are popular restaurant items. Consequently, restaurants, especially fast food and fast casual restaurants, provide such fried protein dishes on a large volume basis. On-site preparation of such fried protein dishes in restaurants currently requires that the food preparer at the restaurant handle raw protein pieces to coat the protein pieces in a batter, bread the batter-coated protein pieces, and then fry the protein pieces both to cook them and to harden the batter coating, typically to a firm or crispy crust. Many processes for frying protein pieces require the protein pieces to be coated, by dredging or immersion, with liquid batter that may include raw egg and/or other ingredients that may spoil when kept at room temperature for a prolonged period of time, or if kept too long in a chilled but not frozen state, which may present a hygiene problem for the restaurant. In addition, coating uncooked protein pieces prior to frying creates a risk of the protein spoiling if allowed to remain at room temperature too long, or if refrigerated in a chilled but not frozen state for too long.

In addition, there is a demand for fried animal protein that can be prepared and advertised as "always fresh-never frozen," A risk in providing such food on a commercial scale, where the food is initially prepared at a processing plant and final preparation occurs at a restaurant, is that care must be taken to avoid serving food contaminated with spore-forming pathogens such as Clostridium botulinum, Clostridium perfringens, and Bacillus cereus. Such organisms may survive the heat treatment given to food products, and subsequently germinate, grow, and multiply during cooling, storage, and distribution. Some pathogens, such as Listeria monocytogenes, Yersinia enterocolitica, and Aeromonas hydrophila, are capable of growth at refrigeration temperatures under anaerobic conditions, which may be encountered with sous vide-prepared products that are cooked in plastic films.

Processes involving cooking in-bag are known. For example, Knight et al. U.S. Pat. No. 3,952,110 titled "DRY MIX FOR COATING FOODS" discloses applying a dry mix comprising a farinaceous ingredient, wheat flour, and a buffering agent blended with water poured over a roast of pork in a cooking bag, then cooking in an oven at 190.6° C (375° F) for 2 hours. The roast is then removed from the bag and consumed.

McGuckian U.S. Pat. No. 3,966,980 titled "METHOD OF COOKING AND STORING FOOD IN FLEXIBLE BAGS" discloses placing raw protein, such as breaded chicken that has been deep fat fried sufficiently to set the breading, in a vacuum package and sous vide cooking the chicken completely. The cooked chicken is chilled in-pouch, and later re-heated and optionally flash fried for consumption.

Application No. PCT/RU2014/000694 titled "METHOD FOR PRODUCING PORTIONED FOOD PRODUCTS IN A DOUGH POUCH" discloses deep-frying packaged, uncooked portions of food products in a dough pouch. The dough pouch of uncooked portions is prepared and frozen at a different time from when the dough pouch is deep fried. The frozen dough pouch is placed in a flexible package and the package is placed in the heated oil for frying. The completely cooked dough pouch of portions is then removed from the package and consumed.

In each of the foregoing references, the cooking process was completed while the food product was in the pouch. Therefore, with each of these processes, in order to vary the type of food product cooked, it is necessary to vary the ingredients of the food product that are placed in the cooking pouch or package.

Therefore, there is a need for a system and process for preparing fried protein dishes in a manner that minimizes the chance of contamination from using contaminated or spoiled batter, that minimizes the chance of the animal protein itself spoiling, and delays the growth of toxigenic bacteria, and yet does not require freezing the product to preserve it for extended periods of time. There is also a need for a process and system for preparing fried protein dishes that can be performed by relatively unskilled preparers, and which eliminates the need for a food preparer to handle raw, uncooked protein pieces when coating the protein pieces and when frying them. Further, there is a need for a system and process for preparing fried protein dishes that allows broad culinary options to be employed in the final preparation step.

### SUMMARY

The disclosed method solves the problem inherent in prior art methods of cooking protein pieces in pouch. The disclosed method produces a food product comprising a battered, thoroughly cooked and vacuum-sealed food item that later can be breaded with any of a variety of breadings selected by the ultimate consumer and flash fried at the restaurant where it is served to the consumer. This process eliminates having to handle either a raw food product or a raw batter at the restaurant, thereby minimizing the chances of serving spoiled or contaminated food. In an exemplary embodiment, the disclosed method does not require freezing the cooked, battered and vacuum-sealed food product between the time the product is prepared to the time in which it is optionally breaded and flash fried. This enables the restaurant to advertise entrees made from the product as "fresh-never frozen."

According to the invention, the uncooked food product is coated with a high-gluten batter, sealed in pouches, and cooked at a temperature and for a time below which the batter hardens. Furthermore, the food product comprises pieces of protein such as animal protein, which includes meat, such as beef, pork, poultry, fish, and game. Optionally, a spoilage inhibitor is applied to the raw food product before it is battered, and/or the spoilage inhibitor is mixed with the batter. Also optionally, the raw food product is pre-coated with flour and/or seasoning before it is battered.

The pouches of cooked protein pieces then are chilled, and later shipped, optionally in a chilled state, for later use. The batter, which optionally is mixed with a spoilage inhibitor, is formulated to remain tacky after in-pouch cooking and subsequent chilling of the food product to which it is applied. The end user simply removes the previously battered and cooked food products from their pouches, applies a selected breading to the still-tacky batter, and flash fries the breaded pieces of food product sufficiently to heat the product to a serving temperature, which also hardens the batter and secures the breading to the batter. Alternatively, the food product is not breaded, but is flash fried to heat the product to a serving temperature and harden the batter.

The optional addition of a spoilage inhibitor prior to cooking the pieces of food product provides extended shelf life and fresh distribution of the battered cooked pieces of protein in bag without having to freeze the food product. The spoilage inhibitor also will delay the growth of toxigenic bacteria in the event of a breakdown in the cold chain and/or in the event that bag or pouch containing the cooked product is punctured (e.g., a "leaker product").

The batter, which is made from a high-gluten flour, remains tacky after the food product is cooked in-pouch and chilled, so the end user need only bread and/or coat the food product as desired, and flash fry the pieces of food product for serving. The optional application of a spoilage inhibitor enables the pieces of battered and cooked food product to be stored and transported safely without freezing. In an exemplary embodiment, the battered food product pieces are vacuum sealed with the spoilage inhibitor, and the sealed pouches are sous vide cooked. In various embodiments, the spoilage inhibitor is applied to the pieces of food product at one or more points during the preparation of the pieces of food product and their being sealed in pouches for cooking.

Because the batter is selected to remain tacky after the pieces of food product are fully and thoroughly cooked in-pouch, there is no need for coating the protein pieces a second time with a batter or another tacky substance to adhere breading to the pieces of protein at the point of frying, which reduces the likelihood of contamination of the pieces of food product by spoiled batter and streamlines the food preparation process at the point of final preparation for service. The system and method also provide a precooked protein product, optionally to which a spoilage inhibitor is applied, to a food preparer that reduces the occurrence of food product pieces spoiled by the growth of harmful bacteria.

A system for cooking pieces of food product may include a first station that receives the pieces of food product in an uncooked state and optionally applies an effective amount of a spoilage inhibitor to the pieces of protein to delay growth of toxigenic bacteria; a batter applicator that receives the pieces of uncooked protein with the optional inhibitor from the first station and applies a batter made from flour having gluten to the outer surfaces of the pieces of uncooked protein; a packaging machine that receives the pieces of uncooked protein coated with the batter made from the flour having gluten from the batter applicator and seals the pieces of protein in plastic pouches; and a heating unit that receives the sealed plastic pouches containing the uncooked protein coated with the batter from the packaging machine and cooks the battered protein pieces in the plastic pouches, wherein the heating unit is programmed to cook the pieces of protein for a time and at a temperature sufficient to completely cook the protein but below that which would harden the batter.

A system for cooking pieces of protein may include a batter applicator that receives the pieces of uncooked protein and applies a batter made from high-gluten flour to outer surfaces of the pieces of uncooked protein; a packaging machine that receives the pieces of uncooked protein coated with the batter made from the flour having gluten from the batter applicator and seals the pieces of protein in plastic pouches; and a heating unit that receives the sealed plastic pouches containing the uncooked protein coated with the batter from the packaging machine and cooks the battered protein pieces in the plastic pouches; wherein the system optionally applies an effective amount of a spoilage inhibitor to the pieces of uncooked protein by one or more of the batter applicator and/or the packaging machine to delay growth of toxigenic bacteria; and wherein the heating unit is programmed to cook the pieces of protein for a time and at a temperature sufficient to completely cook the protein but below that which would harden the batter.

A food processing line for cooking pieces of food product may include an environmentally separated preparation room containing an optional pre-coating applicator that receives the pieces of food product in an uncooked state and applies a coating selected from flour and/or a starch to outer surfaces thereof, a batter applicator that receives the pieces of uncooked food product and applies a batter made from flour having gluten to the coated outer surfaces thereof, and a packaging machine that receives the pieces of uncooked food product coated with the batter made from the flour having gluten from the batter applicator and seals the pieces of food product in plastic pouches, wherein the system optionally applies an effective amount of a spoilage inhibitor to the pieces of protein by one or more of an optional included application station, the optional pre-coating applicator, the batter applicator, and/or the packaging machine to delay growth of toxigenic bacteria; and an environmentally separated cooking room containing a heating unit that receives the sealed plastic pouches from the packaging machine in the preparation room and cooks the battered pieces of food product in the plastic pouches; and wherein the heating unit is programmed to cook the pieces of food product for a time and at a temperature sufficient to completely cook the protein but below that which would harden the batter.

In still another exemplary embodiment, a method for cooking pieces of food product includes optionally applying a coating of an effective amount of a spoilage inhibitor to the pieces of food product in an uncooked state to delay growth of toxigenic bacteria; applying a batter made from flour having gluten to the outer surfaces of the uncooked pieces of food product; sealing in plastic pouches the uncooked pieces of food product coated with the batter made from the flour; and thoroughly and completely cooking the food product pieces in the sealed plastic pouches, wherein a gluten content of the batter coating the food product pieces is selected such that the batter remains tacky after the pieces of food product are thoroughly and completely cooked.

Other objects and advantages of the disclosed method for cooking a food product will be apparent from the following description, the accompanying drawings, and the appended claims.

### BRIEF DESCRIPTION OF THE DRAWINGS

FIG. 1 is a schematic representation of an embodiment of the disclosed system for cooking a food product;
FIG. 2 is a perspective view of pieces of food product in the form of pieces of protein sealed by the packaging machine of the system of FIG. 1 into individual bags or pouches, showing a separated individually sealed piece of protein in a bag or pouch; and
FIG. 3 is a flow chart showing an embodiment of the disclosed method for cooking pieces of food product in the form of pieces of protein, optionally with spoilage inhibitors.

### DETAILED DESCRIPTION

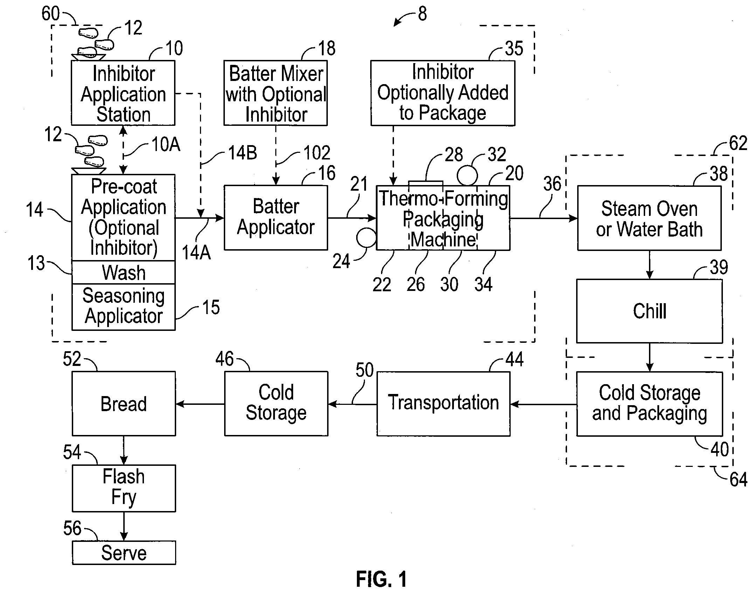

As shown in FIG. 1, the system, generally designated 8, for cooking pieces of food product may include an optional first station 10 that receives the pieces of food product, which in the exemplary embodiment are pieces of protein 12 in an uncooked state (i.e., raw) and applies an effective amount of a spoilage inhibitor to the pieces of protein to delay growth of toxigenic bacteria in the pieces of protein. The optional first station 10 may receive the uncooked pieces of protein 12 via a conveyor (not shown), or the uncooked pieces of protein may be fed or loaded manually into the first station, which may include a hopper that receives the pieces of protein. In exemplary embodiments, food product includes edible animals and vegetables. The pieces of protein 12 are selected from vegetable or animal protein. In the latter case, the animal protein is selected from whole-muscle, intact chicken pieces, other types of poultry such as turkey and duck, and other animal protein such as beef, ground beef patties, pork, whole (i.e., unshredded) fish pieces, game, and patties made from the foregoing. In other embodiments, the protein may take the form of formed pieces of meat, shredded chicken, other poultry, and fish.

The first station 10 may be in the form of a duster unit, such as that manufactured by Spooner Vicars of Wigan, United Kingdom, and the Alco Preduster Type ABM, manufactured by Alco-Food-Machines GmbH & Co. KG of Bad Iburg, Germany. Alternatively, the first station 10 is in the form of a manual application station that applies the spoilage inhibitor in either liquid or solid form to the pieces of protein 12 manually, and/or a tumbler unit that applies the spoilage inhibitor in either liquid or solid form to the pieces of protein, and/or a duster unit that applies the spoilage inhibitor in a fine solid particulate form to the pieces of protein, and/or a shaker unit that applies the spoilage inhibitor to the pieces of protein in a fine solid particulate form.

The optional first station 10 may apply an effective amount of a spoilage inhibitor, such as an amount effective to delay growth of toxigenic bacteria in the pieces of protein 12. Bacteria targeted may include Clostridium botulinum, Clostridium perfringens, Bacillus cereus, Listeria monocytogenes, Yersinia enterocolitica, and Aeromonas hydrophila. The spoilage inhibitor may inhibit bacterial growth and/or toxigenesis in the food product, including one or more of the foregoing strains. Such a spoilage inhibitor may be selected from one or more of lactates, di-acetates, fruit extracts, phenols, fermented products, propionic acid, acids, herbs, spices, spice extracts, herb extracts, spice and herb oils, ferments of sugar, phenols, wood smoke distillates, salts, all-natural ferments, and mixtures thereof. In one exemplary embodiment, the spoilage inhibitor may be based on a formulation of potassium lactate and food-grade sodium di-acetate, such as Opti.Form PD 4 Ultra, manufactured by Purac Biochem Company of Gorinchem Netherlands. The spoilage inhibitor may be coated on the pieces of protein 12 in a liquid concentration of between 0.05% to 6.0%, or between about 0.05% to about 6.0%. As used herein, the term "about" allows for a degree of variability in a value or range, for example, within 10%, within 5%, or within 1% of a stated value or of a stated limit of a range. Regardless of which of the aforementioned methods of applying the spoilage inhibitor is employed, the first station 10 coats the outer surfaces of the pieces of protein 12 with the spoilage inhibitor.

The system 8 optionally includes a pre-coating applicator 14 that may be connected to a wash or sprayer 13. The pre-coating applicator 14 may apply a coating of a starch or flour to the outer surfaces of the pieces of protein 12. In other exemplary embodiments, the pre-coating applicator 14 applies protein powders, egg components, gluten, nut flours, legume flours, non-wheat flours, starches, whey, dairy, protein isolates, other protein sources, and combinations thereof. The wash or sprayer 13 may receive the uncooked protein pieces 12 coated with flour or a starch from the pre-coating applicator 14 and apply a layer of liquid to the outer surfaces of the uncooked protein pieces. The liquid may be selected from egg wash, egg wash substitute, oil, milk, and mixtures thereof. The sprayer 13 may be a disc sprayer, such as The Bakon USA Disc Spraying-Eggwash Sprayer manufactured by Bakon USA Food Equipment of Torrance, California. The sprayer 13 may be selected from a spray coater and a mist coater, such as a Mistcoater SST, manufactured by Automatic Process Equipment Corp. of Lake Odessa, Michigan.

The pre-coat applicator 14 may receive the uncooked pieces of protein 12, and may apply a coating or dusting of a starch and/or flour, mixed with the spoilage inhibitor, on the outer surfaces of the uncooked pieces of protein. The coated uncooked pieces of protein 12 then are transported, either manually or by a conveyor, to the sprayer 13, where they are sprayed with a liquid to form a liquid coating over the flour dusting layer on the outer surfaces of the uncooked pieces of protein. The uncooked pieces of protein 12 then are sent through the pre-coat applicator 14 a second time to apply a second coating or dusting of flour and/or starch mixed with the spoilage inhibitor on the outer surfaces of the uncooked protein pieces.

The system 10 may include an optional seasoning applicator 15. The seasoning applicator 15 itself receives the uncooked pieces of protein 12, which may be by way of a conveyor (not shown) or manual loading received in a hopper, and apply a coating of seasoning on the outer surfaces of the pieces of protein. The seasoning may be selected from salt, pepper, spice or spices, flavorings, extracts, and mixtures thereof. The seasoning applicator 15 may be selected from a vacuum tumbler that tumbles the protein pieces 12 under a vacuum, a drum tumbler, and a tumble mixer. The seasoning applicator 15 may apply seasoning to the outer surfaces of the uncooked pieces of protein 12 and in the system 10 is connected to apply the seasoning to the uncooked pieces of protein prior to the pieces entering the pre-coat applicator 14. In that embodiment, pre-coat applicator 14 may receive seasoned uncooked protein pieces 12 from the seasoning applicator 15 and apply a coating of flour and/or starch mixed with spoilage inhibitor to outer surfaces thereof.

The system 8 optionally includes a conveyor 10A that conveys the uncooked protein pieces 12 between the pre-coat applicator 14 and/or seasoning applicator 15 and the inhibitor application station 10. The conveyor 10A is an integral component of the inhibitor application station 10 or the pre-coat applicator 14. Thus, uncooked protein pieces 12 first are optionally treated with a spoilage inhibitor, then transported by conveyor 10A to pre-coat applicator 14 for an application of flour and/or starch and/or seasoning. Conversely, uncooked protein pieces 12 are coated with flour and/or starch and or seasoning by the pre-coat applicator 14 and/or seasoning applicator 15, then transported to the inhibitor application station 10 by conveyor 10A. Alternatively the inhibitor application station 10 may be integrated into the optional pre-coat application station 14 and/or seasoning applicator 15 as a single unit.

The uncooked protein pieces 12, optionally treated with a spoilage inhibitor, either at the inhibitor application station 10, or at the pre-coat applicator 14, and/or seasoning applicator 15, and optionally sprayed with a layer of liquid by wash or sprayer 13, may be conveyed by a first conveyor 14A, or conveyed manually, such as by trays, to a batter applicator 16. In an embodiment in which the uncooked protein pieces 12 are coated with a liquid by the sprayer 13, the batter applicator 16 receives the uncooked protein pieces 12 from the sprayer, and in still other embodiments, the batter applicator receives the uncooked protein pieces, optionally first coated with the flour and/or starch, then with the layer of liquid, and finally with the second coating of flour and/or starch on the outer surfaces thereof. Optionally, the batter applicator 16 receives uncooked protein pieces 12 directly from the inhibitor application station 10, either manually, as by trays, or by a conveyor 14B.

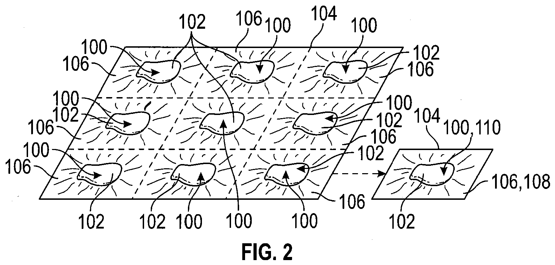

The batter applicator 16 applies a batter 102 (see FIG. 2) made from flour having gluten, which is a high-gluten flour, to the coated outer surfaces of the uncooked pieces of protein 12, making battered uncooked protein pieces 100 (see FIG. 2). The batter applicator 16 may include or consist of a BatterPro batter applicator manufactured by Nothum Food Processing Systems of Springfield, Missouri, or any one or more various commercial batter applicators, such as those manufactured by John Bean Technologies Corp. of Chicago, Illinois, including the Heritage XL, APB, Rotary Drum, and T-1 models. Optionally, the batter applicator 16 supplies batter from a batter mixer 18, such as a batter mixer manufactured by Nothum Food Processing Systems of Springfield, Missouri. Alternatively, the batter applicator 16 applies batter 102 to the dusted, uncooked pieces of protein 12 by dipping or drench/waterfall, and may take the form of conveyor-style, rotary drum, and/or batter-breading equipment. Alternatively, the application of batter 102 to the pieces of protein 12 is performed manually, as by dipping or dredging.

The batter 102 includes a mixture of flour and water, and the flour consists of, or includes, a high-gluten flour mixed with water because it will remain sticky or tacky after the pieces of protein 12 are sous vide cooked, until the pieces of protein 12 are fried. The high-gluten flour is selected to have between 12% to 25% gluten. A suitable high-gluten flour (often used for bread flour) is typically about 12% to 15% gluten. The gluten content of the batter 102 is selected such that the batter remains tacky after the pieces of protein 12 are thoroughly and completely cooked. The degree of tackiness or stickiness is sufficient to cause breading, in particular dry breading, to adhere to the batter without application of further liquids or coatings. High-gluten flour, and in particular, flour having a gluten content in the aforementioned ranges, withstands higher temperatures and longer cooking times necessary to thoroughly and completely cook the pieces of protein 12. Conversely, the cooking temperature and time are selected such that the protein pieces 12 are thoroughly and completely cooked, but are below that which would harden the batter 102.

The water-to-flour mixture for the high-gluten batter 102 is in the range of about 60% water to about 40% flour by volume, which may be preferred if the pieces of protein 12 are chicken. A ratio of about 70% water to 30% flour by volume is preferable for dryer proteins. Batter 102 made from water-to-flour ratios between these two ratios also is acceptable. In embodiments, a water-to-flour ratio of as high as 88% water to 15% water is functional.

It is preferable to use a relatively sticky, high-gluten flour to make the batter 102. In embodiments, it may be desirable to add egg white, egg, milk, buttermilk, seasonings, soy, fish meal, meat-meal, nut meal, legume-flour, pea-flour, or other proteins, or mixtures of the foregoing, to the batter, but such additional ingredients are optional and not essential to the effectiveness of the disclosed method. Optionally, the batter 102 may include a spoilage inhibitor, such as the inhibitors listed above. The spoilage inhibitor mixed with batter 102 is used with the system 8 in addition to or in place of the spoilage inhibitor applied at inhibitor station 10 and/or pre-coat applicator 14 and/or seasoning applicator 15.

The system 8 may also include a packaging machine, generally designated 20, that receives the battered uncooked protein pieces 100 from the batter applicator 16 and seals the battered uncooked protein pieces in plastic pouches 106 (see FIG. 2). The packaging machine 20 may take the form of a thermoforming packaging machine that vacuum seals the uncooked, battered protein pieces 100 in the plastic pouches 106. The battered uncooked protein pieces 100 are conveyed to the packaging machine 20 by a second conveyor 21, and/or manually by carrying trays of battered uncooked protein pieces to the packaging machine.

A typical thermoforming packaging machine 20 that may be employed in the system 8 is a Multivac R 530, manufactured by MULTIVAC Sepp Haggenmüller SE & Co. KG. Such a thermoforming packaging machine 20 includes a forming station 22 that receives a lower web 24 of formable sheet plastic from a roll and forms or shapes the plastic sheet by the effects of heat, compressed air and vacuum. The food-grade plastic is selected to be heat sealable and able to withstand food cooking temperatures, such as for sous vide or steam cooking, which range from 60° C-76,6̅° C (140° F - 170° F) or higher, depending upon the type of protein piece 100 cooked.

The pliable sheet of the lower web 24 is conveyed to a loading area 26 of the thermoforming packaging machine 20 in which the sheet is placed into cavities on a tray shown schematically as 28 in FIG. 1. The battered uncooked protein pieces 100 are placed in the individual cavities of the tray 28 in the loading area 26, and the trays are moved to a sealing station 30 of the thermoforming packaging machine 20, where an upper web 32 of formable sheet plastic is applied on top of the lower web 24 and over the battered uncooked protein pieces 100. In an embodiment, the battered uncooked protein pieces 100 are manually removed from the first conveyor 21 and placed into the cavities of the tray 28 of the thermoforming packaging machine 20, which is lined with the lower web 24.

The upper and lower webs 24, 32 are sealed hermetically to each other at the sealing station 30 by means of a seal seam to form the bags or pouches 106, each containing one or more battered uncooked protein pieces 100. The sealed bags or pouches 106 may be conveyed to a crosscutting and longitudinal cutting unit station 34 of the thermoforming packaging machine 20 where they are sliced into individual sealed plastic bags or pouches 108 (see FIG. 2), each containing one or more battered uncooked protein pieces 100. In an embodiment, air may be evacuated from the bags or pouches 106 of battered uncooked protein pieces 100 by the thermoforming packaging machine 20 such that they are vacuum sealed. In other embodiments, air may not be evacuated from the bags or pouches 106 before sealing. In another embodiment, the battered uncooked protein pieces 100 are placed, either manually or by machine into individual preformed bags or pouches 108, which are then hermetically vacuum sealed. In such embodiment, the thermoforming packaging machine 20 takes the form of a conventional vacuum food sealer.

The system 8 optionally includes an inhibitor applicator 35 that places the spoilage inhibitor into the pouches 106 with the uncooked battered pieces of protein 12. The spoilage inhibitor is placed in the pouches 106 in a form selected from a sauce, a paste, a chip, a dollop, and a puck. In embodiments, the spoilage inhibitor is placed into the pouches 106 in frozen form with the uncooked battered pieces of protein 12. The addition of the optional spoilage inhibitor to the pouch 106 at this point may be instead of, or in addition to, the application of the spoilage inhibitor at the application station 10, and/or pre-coat applicator 14, and/or wash station 13, and/or seasoning applicator 15, and/or batter applicator 16.

As shown in FIG. 2, the individual battered uncooked protein pieces 100, which are coated on their outer surfaces with layers of the high-gluten batter and optional spoilage inhibitor 102, and optionally over the dusting of flour and/or a layer of seasoning, are hermetically sealed within heat seal seams 104 forming individual pouches 106 by the thermoforming packaging machine 20 (FIG. 1). In an exemplary embodiment, a single piece of battered uncooked protein 100 is sealed in one or more of the pouches 106; in other embodiments, more than one piece of battered protein 100 is sealed in one or more of the pouches 106. Crosscutting and longitudinal cutting unit station 34 may cut the pouches 106 into individual sealed plastic bags or pouches 108 along heat seal seams 104. The terms "in-bag" and "in-pouch," and "bag" and "pouch" are used interchangeably herein and have the same meaning.

As shown in Fig. 1, the battered uncooked pieces of protein 100, sealed within the individual pouches 108 (FIG. 2), are conveyed either manually and/or by a third conveyor 36 from the packaging machine 20 to a heating unit, generally designated 38, that in embodiments is a steam oven and/or a heated water bath. There, the sealed pouches 108 are heated to cook the battered protein pieces 100 thoroughly in-pouch. Cooking temperatures range from 60° C-76,6̅° C (140° F-170° F), depending upon the type of protein piece 12 cooked, the desired texture of the piece of protein, and the composition of the batter 102. In one exemplary embodiment, the vacuum-formed, vacuum-sealed pouches 108 are sous vide cooked in either a steam oven or a hot water bath heating unit 38 that thoroughly and fully cooks the battered pieces of protein 100 in-pouch. The temperatures and times of cooking will vary depending upon the specific type of protein to be cooked, the thickness of the battered pieces of protein 100, the composition of the batter 102, and the type of heating unit 38 employed. In any event, the battered pieces of protein 100 may be thoroughly and completely cooked sufficiently to meet food safety requirements for both private and public consumption. At the same time, the cook temperatures and cook times are selected to be below that which would harden the batter 102 coating the battered pieces of protein 100 making breading unable to adhere to the batter.

After the in-pouch battered pieces of protein 100 are thoroughly cooked, the battered cooked pieces of protein 110 are optionally chilled. In embodiments, the battered cooked pieces of protein 110 are chilled to about 4, 4̅° C(40°F)**.** The requisite chill temperature, chilling time, and the time interval between cooking and chilling the battered cooked pieces of protein 110, may vary depending upon the type of protein to be chilled and the regulations of the United States Department of Agriculture (USDA) or other governing body. If the in-pouch battered cooked pieces of protein 110 are cooked in a water bath 38, such as sous vide cooked, the battered cooked pieces of protein are chilled in a cold water bath in the same vessel 38. In other embodiments, such as where the heating unit 38 takes the form of a steam oven, the in-bag or in-pouch battered cooked pieces of protein 110 are chilled in a separate cold water bath or chilling apparatus 39, which are in the form of a tank of chilled water.

The chilled in-pouch battered cooked pieces of protein 110 are conveyed by a fourth conveyor 40, and/or in embodiments conveyed manually or by pallet moving equipment, to a cold storage 42. The cold storage 42 maintains the cooked protein pieces 110 in individual pouches 108 chilled for intermediate storage duration, or alternatively, freeze the cooked battered protein pieces 110 in individual pouches 108 for longer term storage and subsequent transportation. The cold storage 42 may include packaging the individual in-pouch battered cooked pieces of protein 110. Packaging may include placing predetermined numbers of the bags or pouches 108 in plastic totes, bulk boxes, and/or corrugated containers. Packing of the pouches or bags 108 is performed either before or after freezing the chilled cooked battered protein pieces 110 in the cold storage 42. The cooked and chilled battered protein pieces 110 optionally are flash frozen in the cold storage 42.

The cooked battered protein pieces 110, now either frozen or chilled in individual pouches 108 and packaged, are transported by a mechanism, schematically represented as 44, from the cold storage 42. In various embodiments, the transportation mechanism 44 takes the form of a conveyor, a refrigerated truck, and/or an unrefrigerated delivery vehicle, the latter of which includes insulated containers for the bags or pouches 108. The bags or pouches 108 of chilled or frozen, battered cooked pieces of protein 110 are placed into the transportation vehicle 44 by a conveyor 48, and/or by hand-loading or loading with a loading device such as a pallet lifter or pallet truck (not shown).

When delivered to the destination remote food service facility, the containers of chilled or frozen in-bag battered cooked pieces of protein 110 are unloaded from the transportation vehicle 44 manually and/or by mechanical means, indicated schematically at 50, and are stored in a destination cold storage facility or receptacle 46. The cold storage 46 may be associated with an end user, such as at a restaurant, including a fast food restaurant or a fast casual restaurant, or other food service provider. At the remote facility, when ready for consumption, a bag or bags 108 of chilled or frozen battered cooked protein pieces 110 are unpacked and removed from the cold storage 46. If the bag or bags 108 of the cooked battered pieces of protein 106 have been chilled but not frozen, then the batter is already tacky. If the cooked battered pieces of protein 106 have been frozen, it is necessary to thaw them, at which time the batter 102, because it is a high-gluten batter of the type described herein, again becomes tacky when warmed to above freezing (0° C/ 32 ° F).

The cooked battered pieces of protein 110 optionally are breaded at a food preparation station 52 at the destination restaurant or other food provider. The breading or other coating will adhere to the batter 102 coating of the battered cooked pieces of protein 110 because it has remained tacky after the food product within the bag 108 has been cooked. Additional batter or other coating substances are not required at this point to get the breading or other coating to adhere to the outer surfaces of the cooked pieces of protein 110.

The breaded cooked protein pieces 110 may then be placed in a cooking device 54, such as a flash fryer. The flash fryer 54 may have cooking oil at a temperature of, or about, 204, 4̅° C (400° F) or greater and the flash frying may take place for 90 seconds, or about 90 seconds. For larger battered cooked pieces of protein 110, for example a large, thick 255,146 g (9 oz.) boneless breast portion cut from an 519,291 g (18 oz.) chicken breast, or a large bone-in thigh, a cook temperature of about 162,7̅° C to 176,6̅° C (325 ° F - 350° F) for about 150 seconds may be preferable. Cook temperatures may be from about 151,6̅° C to 229, 4̅° C (305° F - 445° F) with multiple oil types, such as canola, vegetable shortening, cottonseed, beef tallow, and the like. In any event, the flash frying is at an oil temperature and for a time sufficient to harden the batter coating 102 and attach the second coating of breading or other particulate coating to the cooked protein piece 110, and to bring the previously cooked protein pieces 110 to serving temperature. The cooked protein pieces 110, now flash fried, are ready for serving as indicated block 56, which optionally is a serving table or an individual plate. The reduced cooking time in the fryer reduces the total fat and/or saturated fat in the protein pieces 110.

The cooking device 54 may selected from a microwave oven, a convection oven, an infrared oven, or an oven with conventional resistance heating elements or gas burners. Alternatively, the cooking device 54 is selected from a skillet, a hot plate, an over-fired broiler, a chargrill, and a flat grill. The cooked battered protein pieces 110 may be heated to serving temperature without breading, so that the batter coating 102 simply is hardened on the previously cooked battered protein pieces. The cooked battered protein pieces 110 may be flash fried, then heated to serving temperature by one of the aforementioned methods, either before or after flash frying. Flash frying the cooked, battered, and breaded protein pieces 110 hardens the exterior of the protein piece and adheres the breading to the tacky batter coating 102.

The system 8 for cooking pieces of protein 12 may take the form of a food processing line having an environmentally separated preparation room 60 that contains the optional inhibitor application station 10; optional flour and/or starch applicator 14, optional wash 13, and optional seasoning applicator 15; the batter applicator 16; the batter mixer 18; and the thermoforming packaging machine 20. The food processing line 10 also includes an environmentally separated cooking room 62 that contains the heating unit 38, which includes a chill bath 39, an environmentally sealed cold room 64 containing the cold storage 42, and optionally a packaging facility. Each of the preparation room 60, the cooking room 62, and the cold room 64 is environmentally separated, which includes individually atmospherically (i.e., by providing separate air supply and exhaust systems) and structurally isolating them from the ambient environment and from each other to effectively prevent any contamination from occurring.

The first conveyor 14A conveys the uncooked pieces of protein 12 from the pre-coat applicator 14 to the batter applicator 16 in the preparation room 60. Alternatively, the inhibitor station 10 conveys the uncooked pieces of protein 12 by first conveyor 14B to the batter applicator 16. The second conveyor 21 conveys the uncooked pieces of protein 100 coated or battered with high-gluten flour from the batter applicator 16 to the thermoforming packaging machine 20 in the preparation room 60. The third conveyor 36 conveys the battered uncooked pieces of protein 100, sealed in separated, individual plastic pouches 108, from the thermoforming packaging machine 20 in the preparation room 60 to the heating unit 38 in the cooking room 62.

The fourth conveyor 40 may convey the cooked battered pieces of protein 110, sealed in separated plastic pouches 108, from the heating unit 38 in the cooking room 62 to the cold storage 42 in the cold room 64. The third conveyor 36 and fourth conveyor 40 pass through the walls separating the preparation room 60 from the cooking room 62, and the cooking room from the cold room 64, respectively, through openings that restrict air passage between the rooms.

Thus, the pre-coating applicator 14, the batter applicator 16, and the thermoforming packaging machine 20 are series connected to each other by the first conveyor 14A and the second conveyor 21, respectively, in preparation room 60. Alternatively, the inhibitor application station 10 is series connected to the batter applicator 16 by conveyor 14B in preparation room 60. Still alternatively, the optional inhibitor station 10 and the optional pre-coat applicator 14 are series connected to each other by conveyor 10A, so that uncooked pieces of protein 12 pass from inhibitor application station 10 to pre-coat applicator 14, or conversely from the pre-coat applicator to the inhibitor application station.

The heating unit 38 is series connected to the thermoforming packaging machine 20 by way of the third conveyor 36, and the cold storage 42 is series connected to the heating unit 38 by way of the fourth conveyor 40. Thus, the optional inhibitor application station 10 and/or pre-coat applicator 14, the first conveyor 14A/14B, the batter applicator 16, the second conveyor 21, the thermoforming packaging machine 20, the third conveyor 36, the heating unit 38, the fourth conveyor 40, and the cold storage 42 are series connected in that order, as shown in FIG. 1.

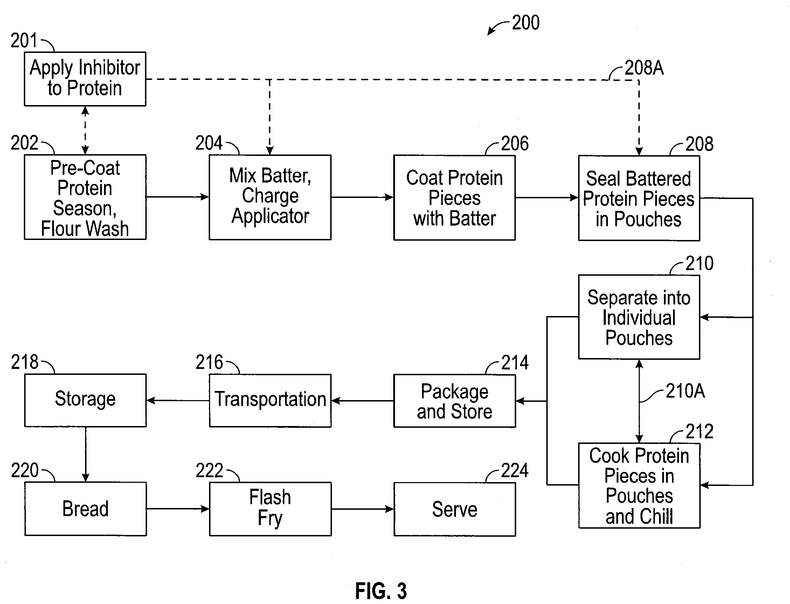

As shown in FIG. 3, the foregoing system 8 may provide a process 200 for cooking battered pieces of protein 100 that are stored in a cold storage 42 and later breaded and flash fried without the addition of batter at the time of flash frying. As indicated in block 201, the process 200 optionally begins by applying a coating of an effective amount of a spoilage inhibitor to the pieces of protein 12 in an uncooked state. This is effected by applying the spoilage inhibitor to the uncooked pieces of protein at the inhibitor application station 10, then optionally applying a pre-coat of flour and/or starch and/or seasoning mixed with the spoilage inhibitor at the pre-coat applicator 14, shown in block 202. As described previously, the pre-coating optionally includes other protein powders, egg components, gluten, nut flours, legume flours, non-wheat flours, starches, whey, dairy, protein isolates, other protein sources, and combinations thereof.

Alternately, or in addition, the optional spoilage inhibitor is mixed with the high-gluten batter 102 by a batter mixer 18, shown in block 204, and the mixture applied to the uncooked pieces of protein 12 by a batter applicator 16, shown in block 206. Alternately, or in addition, the optional spoilage inhibitor is added to the pouches 106 at the thermoforming packaging machine 20 prior to vacuum sealing the pouches, shown in block 208 (see also FIG. 1). The inhibitor application station 10 and/or pre-coat applicator 14 operates in batch mode or continuous mode.

The step of block 202 optionally includes a step of mixing spices with the flour and/or starch that is coated or dusted onto the uncooked pieces of protein 12, which may or may not include the spoilage inhibitor. Also as indicated in block 202, optionally, the uncooked protein pieces 8 are washed by the wash or sprayer 13 that applies a layer of liquid to the outer surfaces of the uncooked protein pieces after applying the coating of flour and/or starch. In embodiments, liquid is selected from egg wash, egg wash substitute, milk, oil, liquid flavoring, and mixtures thereof. Block 202 optionally includes a step of applying a second coating of flour to the outer surfaces of the uncooked protein pieces 8 after applying the layer of liquid.

As indicated in block 202, optionally, the process 200 begins by placing uncooked pieces of protein 12 in a seasoning applicator 15, such as a vacuum tumbler (see FIG. 1) to coat the pieces of protein with seasoning. The process 200 may continue with the seasoned uncooked pieces of protein 12 being conveyed to the inhibitor application station 10 described in reference to block 201.

As shown in block 204, the high-gluten batter 102 is prepared in the batter mixer 18, and the batter is charged into the batter applicator 16. As indicated in block 206, the uncooked pieces of protein 12 are conveyed by the first conveyor 14A, 14B to the batter applicator 16 and coated with batter 102 in the applicator. Alternatively, uncooked pieces of protein 12 are placed directly into the batter applicator 16 and coated with batter 102 without having been seasoned, dusted with flour, or washed or sprayed. Optionally, the spoilage inhibitor is mixed with the batter 102, made from high-gluten flour, and the mixture applied to the outer surfaces of the uncooked pieces of protein 12. The process steps in blocks 201 and 204 may be performed sequentially in the order shown in FIG. 3, or performed simultaneously, or performed in reverse order shown. These and other steps of process 200 may be performed continuously and/or in batch mode. Alternatively, in block 206 uncooked food product, such as pieces of protein 12, are placed directly into the batter applicator, or manually coated with batter.

As indicated in block 208, the uncooked battered pieces of protein 100 are conveyed by the second conveyor 21 to the thermoforming packaging machine 20, wherein the uncooked battered protein pieces are sealed, in embodiments vacuum sealed, in individual plastic pouches 106 in a sheet, and are separated into individual pouches 108, as indicated in block 210. As indicated by dashed line 208A, the spoilage inhibitor optionally is added directly to the pouches at this point, either alone, or in addition to the application of the spoilage inhibitor with pre-coating at block 202 and/or with the batter 102 at block 204. Alternatively, in block 208 uncooked battered pieces of protein 100 are placed into preformed plastic pouches 108, either manually or by machine, and the pouches are sealed by a vacuum sealer.

As indicated in block 212, the in-pouch cooked battered protein pieces 110 are conveyed by the third conveyor 36 to cooking device 38, such as a steam oven or heated water bath, where the battered protein pieces are thoroughly cooked in-pouch, such as by sous vide cooking. As shown by double-headed arrow 210A, in embodiments where the pouches 106 are joined in a sheet, the separation into individual pouches 108 may take place either before or after cooking the pouches. The combination of the cook temperature and the cook time is below the temperature and time combination that would harden the high-gluten batter 102. After cooking, the in-pouch cooked and battered pieces of protein 110 may be chilled, which may be in the chilled water bath 39, or the chilled water may be introduced into the same vessel used for the hot water bath that cooks the battered pieces of protein 110.

As indicated in block 214, the in-bag or in-pouch cooked battered protein pieces 110, now chilled, are stored in cold storage 42, in which they are maintained chilled without freezing, which is facilitated by the optional addition of the spoilage inhibitor, or alternatively frozen. At this time, the pouches 108 optionally are packaged in containers, such as totes, bulk boxes, and/or corrugated cases. The packaging of pouches 108 takes place after the chilling of the pieces of protein 110, and optionally either before or after freezing in the cold storage 42. Predetermined numbers of pouches 108 may be packaged in containers as desired, for example, to fulfill customer orders, or in predetermined assortments or groupings. As indicated in block 216, the packages of pouches 108 later are transported to a restaurant or other food service facility by a vehicle 44.

As indicated in block 218, the containers of pouches 108 of chilled cooked battered pieces of protein 110 are stored in cold storage 46 at the point of delivery for use as needed by the restaurant or food service facility. As indicated in block 220, when needed, one or more pouches 108 of cooked battered protein pieces 110 are unpacked from their containers, warmed, and the protein pieces removed from their pouches. Optional use of the spoilage inhibitor eliminates the need to freeze the pouches 108 of cooked battered pieces of protein 100 if they are to be stored for a long period of time. If the pouches 108 have been chilled and not frozen, the batter 102 on the cooked protein pieces 110 is tacky when the cooked battered protein pieces are removed from their pouches. If, optionally, the cooked battered pieces of protein 110 have been frozen, the batter 102 will become tacky when the cooked battered protein pieces thaw. In either case, the cooked battered pieces of protein 110 may be removed from their pouches 108, and because of the tacky coatings of batter 102 of high-gluten flour, breaded at the food preparation station 52 with a breading of choice, which is selected from any number of predetermined breading formulations, without need of an additional coating of batter or other substance to make the breading adhere to the cooked battered protein pieces 110, as indicated in block 220.

As indicated in block 222, the cooked battered pieces of protein 110, now breaded, are placed in a cooking device, such as the flash fryer 54, and flash fried to harden or make crisp the batter 102 and breading. Since the protein pieces 110 are already cooked, it is only necessary to flash fry the protein pieces sufficiently to harden the batter and warm the protein pieces to a predetermined serving temperature. The reduced frying time reduces the amount of total fat and/or saturated fat in the protein pieces 110. As indicated in block 224, the flash fried protein pieces 110 then may be served to a consumer, who may be a patron of the restaurant.

The advantage of the process 200 is that it provides pre-cooked food product, in particular animal protein, to a food service facility, such as a restaurant, which includes fast food restaurants and a fast casual restaurants, so that the food service facility workers are relieved from handling raw or partially cooked protein, thereby minimizing the likelihood of contamination or spoilage of the protein or batter. The optional addition of an effective amount of a spoilage inhibitor to delay growth of toxigenic bacteria enables the battered cooked pieces of protein to be kept chilled without freezing after cooking at the production line, through storage at the production facility, transportation to a restaurant, to final breading and preparation and flash frying.

At the same time, the food product can be advertised as being made fresh and hand breaded at the location of the restaurant. The flour applicator 12 optionally provides a light dusting of flour on the uncooked protein pieces 8 that may facilitate the adherence of the high gluten batter 102 to the uncooked food product, especially if the pieces of uncooked food product pieces are moist on their outer surfaces.

## Claims

1. A method for cooking pieces of protein, the method comprising:
applying a coating of flour to outer surfaces of uncooked protein pieces, resulting in coated uncooked protein pieces;
applying a batter including a mixture of flour having gluten and water to the coated uncooked protein pieces, provided that the applying of the batter consisting of high-gluten flour mixed with water includes applying a batter consisting of high-gluten flour selected from flour containing 12% to 25% gluten, resulting in battered uncooked protein pieces consisting of the uncooked protein pieces, the coating and the batter;
sealing the battered uncooked protein pieces coated with the batter made from the high-gluten flour in plastic pouches; and
cooking the sealed battered uncooked protein pieces in the sealed plastic pouches, at a temperature and time selected to completely cook the protein pieces thoroughly and completely, wherein a gluten content of the batter coating the protein pieces is selected such that the batter remains tacky after the pieces of protein are thoroughly and completely cooked, whereby the batter is sufficiently tacky such that breading can adhere thereto.

2. The method of claim 1, further comprising removing the completely cooked, battered pieces of protein from the plastic pouches, wherein the batter is tacky; applying a breading that attaches to the tacky batter of the completely cooked, battered pieces of protein; and flash frying the breaded, completely cooked, and battered pieces of protein.

3. The method of claim 2, wherein flash frying the breaded, completely cooked, and battered pieces of protein includes flash frying the breaded, completely cooked, and battered pieces of protein sufficiently to harden the batter coating with the attached breading.

4. The method of claim 1, further comprising chilling or freezing the cooked, battered protein pieces in the pouches.

5. The method of claim 1, further comprising removing the cooked, battered protein pieces from the plastic pouches; breading the cooked, battered protein pieces; and further cooking the breaded, cooked, battered protein pieces in a cooking device selected from a flash fryer, a microwave oven, a convection oven, an infrared oven, an oven with resistance heating elements, an oven with gas burners, a skillet, a hot plate, an over-fired broiler, a chargrill, and a flat grill.

6. The method of claim 1, wherein cooking in the sealed plastic pouches the protein pieces includes sous vide cooking the uncooked protein pieces, the coating, and the batter in the plastic pouches at a temperature ranging from 60° to 76,6̅ ° C (140° F - 170° F) in a steam oven or a water bath.

7. The method of claim 1, wherein the applying of the batter consisting of high-gluten flour mixed with water includes applying a batter consisting of high-gluten flour selected from flour containing 12% to 15% gluten, and greater than 15% gluten mixed with water.

8. The method of claim 1, wherein the sealing in the plastic pouches of the battered uncooked protein pieces includes vacuum sealing the plastic pouches.

9. The method of claim 1, wherein:
applying the coating to outer surfaces of uncooked protein pieces is performed in an environmentally separated preparation room, and the coating consists of flour and optionally seasoning;
applying the batter including a mixture of flour having gluten and water to the coated outer surfaces of the uncooked protein pieces is performed by a batter applicator in the preparation room, resulting in battered uncooked protein pieces;
the battered uncooked protein pieces are received from the batter applicator and the sealing of the battered uncooked protein pieces in plastic pouches is performed using a thermoforming packaging machine in the preparation room; and
thoroughly and completely cooking the sealed battered uncooked protein pieces in the sealed plastic pouches is performed in a heating unit in an environmentally separated cooking room at a temperature and time whereby after cooking the protein pieces thoroughly and completely, the batter is sufficiently tacky such that breading can adhere thereto.

10. The method of claim 9, wherein the sealing in plastic pouches includes vacuum-sealing in plastic pouches the battered uncooked protein pieces; and wherein the cooking of the battered uncooked protein pieces is in the vacuum-sealed plastic pouches.

11. The method of claim 9, further comprising making the batter consisting of the mixture of flour and water in a batter mixer in the preparation room, and the batter applicator is connected to the batter mixer to receive the batter from the batter mixer.

12. The method of claim 1, wherein:
applying the coating to the outer surfaces of the uncooked protein pieces includes applying a coating consisting of flour optionally mixed with spices, resulting in coated uncooked protein pieces; and
applying the batter includes applying a mixture of flour having the gluten and the water, and optionally egg, milk, buttermilk, seasonings, soy or fish meal, meat-meal, nut meal, legume-flour, pea-flour or mixtures thereof to the coated outer surfaces of the uncooked protein pieces, resulting in battered uncooked protein pieces consisting of the uncooked protein pieces, the coating and the batter.

13. The method of claim 12, wherein applying the coating to the outer surfaces of the uncooked protein pieces includes applying the coating by one of manually applying the coating, a tumbler unit, a duster unit, or a shaker unit.

14. The method of claim 12, wherein applying the coating to the outer surfaces of the uncooked protein pieces includes applying the coating consisting of the flour mixed with seasoning, the seasoning selected from salt, pepper, spice or spices, flavorings, extracts, and mixtures thereof.

## Patentansprüche

1. Verfahren zum Garen von Proteinstücken, wobei das Verfahren umfasst:
Auftragen eines Überzugs aus Mehl auf äußere Oberflächen von ungegarten Proteinstücken, was zu überzogenen, ungegarten Proteinstücken führt;
Auftragen eines Teigs, welcher eine Mischung aus glutenhaltigem Mehl und Wasser aufweist, auf die überzogenen, ungegarten Proteinstücke, wobei das Auftragen des Teigs, der aus mit Wasser vermischtem Mehl mit hohem Glutengehalt besteht, das Aufbringen eines Teigs beinhaltet, welcher Mehl mit einem hohem Glutengehalt aufweist, wobei das Mehl aus Mehl mit einem Glutengehalt von 12 % bis 25 % ausgewählt ist, was zu mit Teig versehenen, ungegarten Proteinstücken führt, die aus den ungegarten Proteinstücken, dem Überzug und dem Teig bestehen;
Verpacken der mit Teig versehenen, ungegarten Proteinstücke, die mit dem aus glutenreichem Mehl hergestellten Teig überzogen sind, in Plastikbeuteln; und
Garen der verpackten, mit Teig versehenen, ungegarten Proteinstücke in geschlossenen Plastikbeuteln bei einer Temperatur und einer Dauer, welche so gewählt werden, dass die Proteinstücke gründlich und vollständig gegart werden,
wobei ein Glutengehalt des Teigs, der die Proteinstücke umhüllt, so gewählt wird, dass der Teig klebrig bleibt, nachdem die Proteinstücke gründlich und vollständig gegart sind, wobei der Teig ausreichend klebrig ist, dass Panade an diesem haften kann.

2. Verfahren nach Anspruch 1, ferner umfassend das Entfernen der vollständig gegarten, mit Teig versehenen Proteinstücke aus den Plastikbeuteln, wobei der Teig klebrig ist; Auftragen einer Panade, welche an dem klebrigen Teig der vollständig gegarten, mit Teig versehenen Proteinstücke haftet; und Anfrittieren der panierten, vollständig gegarten und mit Teig versehenen Proteinstücke.

3. Verfahren nach Anspruch 2, wobei das Anfrittieren der panierten, vollständig gegarten und mit Teig versehenen Proteinstücke ein Anfrittieren der panierten, vollständig gegarten, und mit Teig versehenen Proteinstücke umfasst, welches ausreicht, um die Teigschicht mit der darauf aufgetragenen Panade zu härten.

4. Verfahren nach Anspruch 1, ferner umfassend das Kühlen oder Einfrieren der gegarten, mit Teig versehenen Proteinstücke in den Beuteln.

5. Verfahren nach Anspruch 1, ferner umfassend das Entfernen der gegarten, mit Teig versehenen Proteinstücke aus den Plastikbeuteln; Panieren der gegarten, mit Teig versehenen Proteinstücke; und weiteres Garen der panierten, gegarten, mit Teig versehenen Proteinstücke in einem Gargerät ausgewählt aus einer Fritteuse, einem Mikrowellenofen, einem Konvektionsofen, einem Infrarot-Ofen, einem Ofen mit Widerstands-Heizelementen, einem Ofen mit Gasbrennern, einer Pfanne, einer Heizplatte, einem Oberhitzegrill, einem Holzkohlegrill und einem Flachgrill.

6. Verfahren nach Anspruch 1, wobei das Garen der Proteinstücke in den geschlossenen Plastikbeuteln das Sous-vide-Garen der ungegarten Proteinstücke, des Überzugs und des Teigs in den Plastikbeuteln bei einer Temperatur im Bereich von 60° C bis 76,6̅° C (140° F - 170° F) in einem Dampfgarer oder einem Wasserbad umfasst.

7. Verfahren nach Anspruch 1, wobei das Auftragen des Teigs bestehend aus mit Wasser gemischtem, glutenreichen Mehl das Auftragen eines Teigs bestehend aus mit Wasser gemischtem, glutenreichen Mehl umfasst, bei welchem das Mehl aus Mehl, welches 12 % bis 15 % Gluten enthält, und Mehl, welches mehr als 15 % Gluten enthält, ausgewählt ist.

8. Verfahren nach Anspruch 1, wobei das Verpacken der mit Teig überzogenen, ungegarten Proteinstücke in Plastikbeuteln Vakuumversiegeln der Plastikbeutel umfasst.

9. Verfahren nach Anspruch 1, wobei:
Das Auftragen einer Überzugs auf die äußeren Oberflächen von ungegarten Proteinstücken wird in einem von der Umgebung getrennten Vorbereitungsraum durchgeführt und der Überzug besteht aus Mehl und optional Würzmittel;
das Auftragen des Teigs, welcher eine Mischung aus glutenhaltigem Mehl und Wasser aufweist, auf die überzogenen äußeren Oberflächen der ungegarten Proteinstücke erfolgt mittels eines Teigauftragegeräts in dem Vorbereitungsraum, was zu mit Teig versehenen, ungegarten Proteinstücken führt;
die mit Teig versehenen ungegarten Proteinstücke werden von dem Teigauftragegerät entgegen genommen und das Verpacken der mit Teig versehenen ungegarten Proteinstücke in Plastikbeutel wird mit einer Tiefziehverpackungsmaschine in dem Vorbereitungsraum durchgeführt; und
das gründliche und vollständige Garen der verpackten, mit Teig versehenen, ungegarten Proteinstücke in den geschlossenen Plastikbeuteln erfolgt in einer Heizeinheit in einem von der Umgebung getrennten Garraum bei einer Temperatur und einer Dauer, wobei der Teig nach dem gründlichen und vollständigen Garen der Proteinstücke ausreichend klebrig ist, dass eine Panade an diesem haften kann.

10. Verfahren nach Anspruch 9, wobei das Verpacken in Plastikbeuteln das Vakuumverpacken der mit Teig versehenen ungegarten Proteinstücke in Plastikbeuteln umfasst; und wobei das Garen der mit Teig versehenen ungegarten Proteinstücke in den Vakuum-verpackten Plastikbeuteln erfolgt.

11. Verfahren nach Anspruch 9, ferner umfassend das Herstellen des Teigs bestehend aus der Mischung aus Mehl und Wasser in einem Teigmischer in dem Vorbereitungsraum, und das Teigauftragegerät ist mit dem Teigmischer verbunden, um den Teig aus dem Teigmischer aufzunehmen.

12. Verfahren nach Anspruch 1, wobei:
das Aufragen des Überzugs auf die äußeren Oberflächen der ungegarten Proteinstücke das Auftragen eines Überzugs umfasst, welcher aus Mehl besteht, das optional mit Gewürzen gemischt ist, was zu überzogenen ungegarten Proteinstücken führt; und
das Auftragen des Teigs umfasst das Auftragen eines Gemisches aus glutenhaltigem Mehl und dem Wasser, und optional Ei, Milch, Buttermilch, Würzmitteln, Soja- oder Fischmehl, Fleischmehl, Nussmehl, Hülsenfruchtmehl, Erbsenmehl oder Mischungen daraus auf die überzogenen äußeren Oberflächen der ungegarten Proteinstücke, was zu mit Teig versehenen, ungegarten Proteinstücken führt, welche aus den ungegarten Proteinstücken, dem Überzug und dem Teig bestehen.

13. Verfahren nach Anspruch 12, wobei das Auftragen des Überzugs auf die äußeren Oberflächen der ungegarten Proteinstücke entweder das Auftragen durch manuelles Aufbringen des Überzugs, durch eine Tumbler-Einheit, eine Zerstäubereinheit oder eine Schütteleinheit umfasst.

14. Verfahren nach Anspruch 12, wobei das Auftragen des Überzugs auf die äußeren Oberflächen der ungegarten Proteinstücke das Auftragen des Überzugs beinhaltet, welcher aus dem Mehl gemischt mit Würzmittel besteht, wobei das Würzmittel ausgewählt ist aus Salz, Pfeffer, Gewürz oder Gewürzen, Geschmacksstoffen, Extrakten und Mischungen daraus.

## Revendications

1. Procédé de cuisson de morceaux de protéines, le procédé comprenant :
l'application d'un revêtement de farine sur des surfaces extérieures de morceaux de protéines non cuits, résultant en des morceaux de protéines revêtus non cuits ;
l'application d'une pâte incluant un mélange de farine contenant du gluten et d'eau sur les morceaux de protéines revêtus non cuits, à condition que l'application de la pâte consistant en de la farine à haute teneur en gluten mélangée à de l'eau inclut l'application d'une pâte consistant en de la farine à haute teneur en gluten sélectionnée parmi les farines contenant 12 % à 25 % de gluten, résultant en des morceaux de protéines enrobés de pâte non cuits consistant en les morceaux de protéines non cuits, le revêtement et la pâte ;
le scellement des morceaux de protéines enrobés de pâte non cuits avec la pâte fabriquée à partir de la farine à haute teneur en gluten dans des poches en plastique ; et
la cuisson des morceaux de protéines scellés, enrobés de pâte, non cuits, dans les poches en plastique scellées, à une température et pendant une durée sélectionnées pour cuire complètement les morceaux de protéines entièrement et complètement, une teneur en gluten de la pâte revêtant les morceaux de protéines étant sélectionnée de telle sorte que la pâte reste collante après que les morceaux de protéines aient été entièrement et complètement cuits, la pâte étant suffisamment collante pour qu'une panure puisse y adhérer.

2. Procédé selon la revendication 1, comprenant en outre l'extraction des morceaux de protéines enrobés de pâte, complètement cuits, des poches en plastique, la pâte étant collante ; l'application d'une panure qui s'attache à la pâte collante des morceaux de protéines enrobés de pâte, complètement cuits ; et la friture rapide des morceaux de protéines panés, complètement cuits et enrobés de pâte.

3. Procédé selon la revendication 2, la friture rapide des morceaux de protéines panés, complètement cuits et enrobés de pâte incluant une friture rapide des morceaux de protéines panés, complètement cuits et enrobés de pâte suffisamment pour faire durcir le revêtement de pâte avec la panure attachée.

4. Procédé selon la revendication 1, comprenant en outre le refroidissement ou la congélation des morceaux de protéines enrobés de pâte, cuits, dans les poches.

5. Procédé selon la revendication 1, comprenant en outre l'extraction des morceaux de protéines enrobés de pâte, cuits, des poches en plastique ; la panure des morceaux de protéines enrobés de pâte, cuits ; et la cuisson supplémentaire des morceaux de protéines panés, cuits, enrobés de pâte dans un dispositif de cuisson sélectionné parmi une friteuse rapide, un four à micro-ondes, un four à convexion, un four infrarouge, un four muni d'éléments chauffants à résistance, un four muni de brûleurs à gaz, une poêle, une plaque chauffante, un grill au four, un grill à charbon de bois, et un grill plat.

6. Procédé selon la revendication 1, la cuisson des morceaux de protéines dans les poches en plastique scellées incluant une cuisson sous vide des morceaux de protéines non cuits, du revêtement et de la pâte dans les poches en plastique à une température allant de 60 °C à 76,6 °C (140 °F à 170 °F) dans un four à vapeur ou un bain d'eau.

7. Procédé selon la revendication 1, l'application de la pâte consistant en de la farine à haute teneur en gluten mélangée à de l'eau incluant l'application d'une pâte consistant en de la farine à haute teneur en gluten sélectionnée parmi les farines contenant 12 % à 15 % de gluten, et plus de 15 % de gluten mélangée à de l'eau.

8. Procédé selon la revendication 1, le scellement des morceaux de protéines enrobés de pâte non cuits dans les poches en plastique incluant un scellement sous vide des poches en plastique.

9. Procédé selon la revendication 1 :
l'application du revêtement sur des surfaces extérieures de morceaux de protéines non cuits étant réalisée dans une pièce de préparation environnementalement séparée, et le revêtement consistant en de la farine et éventuellement un assaisonnement ;
l'application de la pâte incluant un mélange de farine contenant du gluten et d'eau sur les surfaces extérieures revêtues des morceaux de protéines non cuits étant réalisée par un applicateur de pâte dans la pièce de préparation, résultant en des morceaux de protéines enrobés de pâte non cuits ;
les morceaux de protéines enrobés de pâte non cuits étant reçus à partir de l'applicateur de pâte et le scellement des morceaux de protéines enrobés de pâte non cuits dans des poches en plastique étant réalisé en utilisant une machine d'emballage à thermoformage dans la pièce de préparation ; et
la cuisson entière et complète des morceaux de protéines scellés, enrobés de pâte, non cuits, dans les poches en plastique scellées étant réalisé dans une unité chauffante dans une pièce de cuisson environnementalement séparée à une température et pendant une durée telles qu'après la cuisson entière et complète des morceaux de protéines, la pâte est suffisamment collante pour qu'une panure puisse y adhérer.

10. Procédé selon la revendication 9, le scellement dans des poches en plastique incluant un scellement sous vide des morceaux de protéines enrobés de pâte non cuits dans des poches en plastique ; et la cuisson des morceaux de protéines enrobés de pâte non cuits ayant lieu dans les poches en plastique scellées sous vide.

11. Procédé selon la revendication 9, comprenant en outre la fabrication de la pâte consistant en le mélange de farine et d'eau dans un mélangeur de pâte dans la pièce de préparation, et l'applicateur de pâte étant connecté au mélangeur de pâte pour recevoir la pâte à partir du mélangeur de pâte.

12. Procédé selon la revendication 1 :
l'application du revêtement sur les surfaces extérieures des morceaux de protéines non cuits incluant l'application d'un revêtement consistant en de la farine éventuellement mélangée à des épices, résultant en des morceaux de protéines revêtus non cuits ; et
l'application de la pâte incluant l'application d'un mélange de farine contenant le gluten et l'eau, et éventuellement de l'œuf, du lait, du babeurre, des assaisonnements, de la farine de soja ou de poisson, de la farine de viande, de la farine de fruit à coque, de la farine de légumineuse, de la farine de pois ou des mélanges de ceux-ci sur les surfaces extérieures revêtues des morceaux de protéines non cuits, résultant en des morceaux de protéines enrobés de pâte non cuits consistant en les morceaux de protéines non cuits, le revêtement et la pâte.

13. Procédé selon la revendication 12, l'application du revêtement sur les surfaces extérieures des morceaux de protéines non cuits incluant l'application du revêtement par un parmi l'application manuelle du revêtement, une unité de culbuteur, une unité de saupoudreur ou une unité de secoueur.

14. Procédé selon la revendication 12, l'application du revêtement sur les surfaces extérieures des morceaux de protéines non cuits incluant l'application du revêtement consistant en la farine mélangée avec un assaisonnement, l'assaisonnement étant sélectionné parmi du sel, du poivre, une épice ou des épices, des aromatisants, des extraits et des mélanges de ceux-ci.
